# EUROPÄISCHE PATENTSCHRIFT

(11) **EP 2 451 065 B1**
(45) Veröffentlichungstag und Bekanntmachung des Hinweises auf die Patenterteilung: **24.01.2018**
(21) Anmeldenummer: 11008679.0
(22) Anmeldetag: 29.10.2011
(51) Int. Cl.: H02M 3/155

(54) **WECHSELRICHTERSCHALTUNG MIT EINEM TIEFSETZSTELLER**
INVERTER CIRCUITRY COMPRISING A BUCK CONVERTER
ONDULEUR COMPORTER UN CONVERTISSEUR ABAISSEUR

(30) Priorität: 05.11.2010 DE 102010050623; 16.02.2011 DE 102011011330
(43) Veröffentlichungstag der Anmeldung: 09.05.2012
(73) Patentinhaber: SEW-EURODRIVE GmbH & Co. KG, 76646 Bruchsal (DE)
(72) Erfinder: Schill, Christoph, 88213 Ravensburg (DE)
(74) Vertreter: Tüngler, Eberhard

(56) Entgegenhaltungen:
- DE-A1- 4 224 795
- US-A- 5 786 992
- US-A- 5 847 949
- US-A- 6 031 739
- US-A1- 2008 123 374
- US-A1- 2010 165 679
- ALONSO O ET AL: "Cascaded h-bridge multilevel converter for grid connected photovoltaic generators with independent maximum power point tracking of each solar array", PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003; [ANNUAL POWER ELECTRONICS SPECIALISTS CONFERENCE], NEW YORK, NY :; IEEE, US, Bd. 2, 15. Juni 2003 (2003-06-15), Seiten 731-735, XP010648900, DOI: 10.1109/PESC.2003.1218146 ISBN: 978-0-7803-7754-7

## Beschreibung

Die vorliegende Erfindung betrifft eine Wechselrichterschaltung mit einem Tiefsetzsteller.

Tiefsetzsteller werden sehr häufig in Stromversorgungen verschiedenster Art verwendet. Wie bei allen leistungselektronischen Baugruppen ist es das Ziel, einen möglichst hohen Wirkungsgrad bei möglichst geringen Kosten zu erreichen.

Ein Wechselrichter benötigt zur Erzeugung einer Wechselspannung in der Regel eine Zwischenkreisspannung einer bestimmten Höhe. Ein optimaler Wirkungsgrad wird üblicherweise erreicht, wenn die Zwischenkreisspannung genau an die zu erzeugende Wechselspannung angepasst ist.

Solargeneratoren liefern abhängig von Lichteinfall, Temperatur und Anzahl der verschalteten Module im Allgemeinen eine stark schwankende Gleichspannung. Je breiter der Bereich der Eingangsgleichspannung ist, die ein Wechselrichter verarbeiten kann, umso mehr Möglichkeiten passender Modulkombinationen gibt es. Zum Beispiel ist bei voller Last ein Eingangsspannungsbereich von 1: 2 bzw. für Volllast bis Leerlauf von 1:2,5 wünschenswert.

Zur Anpassung des Solargenerators an den Wechselrichter wird daher häufig ein Tiefsetzsteller verwendet, der die variable Gleichspannung auf eine relativ konstante Zwischenkreisspannung tiefsetzt.

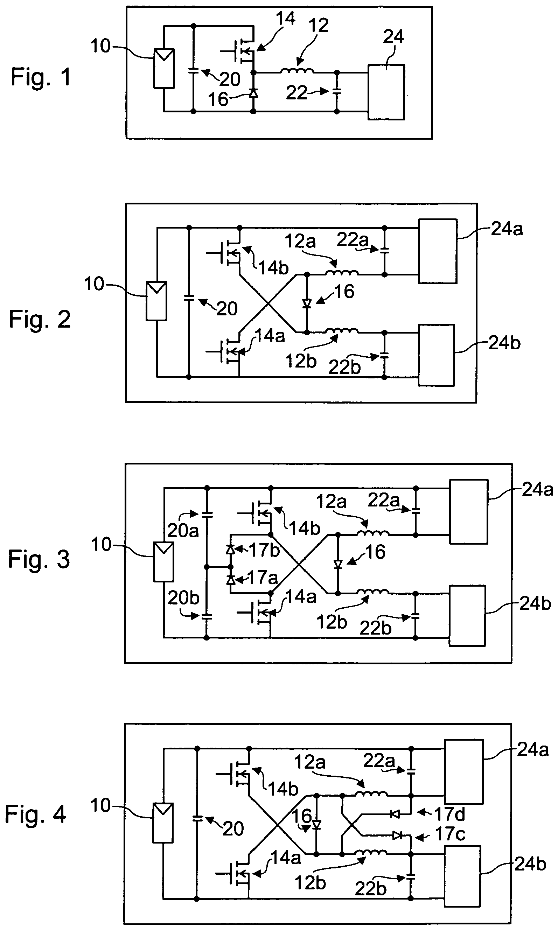

Fig. 1 zeigt die Grundform eines herkömmlichen Tiefsetzstellers (Step-Down-Converter). Der Tiefsetzsteller besitzt einen Eingang und einen Ausgang. Eine speisende Quelle 10 liefert eine Gleichspannung, die als Eingangsspannung am Eingang des Tiefsetzstellers abgegriffen werden kann. Diese Eingangsspannung wird mit dem Tiefsetzsteller (bestehend insbesondere aus einer Drossel 12, einem Schaltelement 14 und einer Diode 16) auf eine geringere Ausgangsspannung herabgesetzt, die am Ausgang 24 des Tiefsetzstellers bereitgestellt wird. Die parallel zum Eingang bzw. Ausgang des Tiefsetzstellers geschalteten Kondensatoren 20 und 22 dienen zur Pufferung der Rippleströme.

Das Schaltelement 14 wird periodisch ein- und ausgeschaltet. Das Taktverhältnis wird über eine Steuereinheit so gewählt, dass sich eine gewünschte Ausgangsspannung oder ein gewünschter Ausgangsstrom einstellt. Wenn das Schaltelement 14 geschlossen ist, fließt Energie von der Quelle 10 durch die Drossel 12 in den am Ausgang 24 angeschlossenen Verbraucher. Ein Teil der Energie wird in der Drossel 12 zwischengespeichert. Wenn das Schaltelement 14 offen ist, fließt der Strom über die Freilaufdiode 16 und die Drossel 12 in den Verbraucher, wobei die zuvor in der Drossel 12 gespeicherte Energie in den Verbraucher abgegeben wird.

Diese herkömmliche Schaltungsanordnung hat mehrere Nachteile:
- Am Eingang und Ausgang treten hohe Rippleströme auf.
- Es wird eine große Drossel benötigt, da große Energiemengen zwischengespeichert werden müssen.
- Die Belastung der Halbleiter ist hoch.
- Der Wirkungsgrad ist schlecht.

Insgesamt ist die Verwendung eines Tiefsetzstellers mit zusätzlichen Kosten, Gewicht und Volumen verbunden. Durch die zusätzlichen Verluste im Tiefsetzsteller wird zudem der Gesamtwirkungsgrad der Wechselrichterschaltung verringert.

Die US 5,786,992 A beschreibt in deren Fig. 8 und 9 eine Schaltungsanordnung zur Power-Factor-Correction. In dieser werden zwei herkömmliche DCDC-Wandler mit galvanischer Trennung über eine Umschaltvorrichtung aus einer gleichgerichteten pulsierenden Netzspannung gespeist. Die Umschaltvorrichtung schaltet die beiden Wandler bei niedriger Eingangsspannung parallel und bei hoher Eingangsspannung in Serie, wodurch eine grobe Abstufung auf entweder 100% oder 50% der Eingangsspannung möglich ist. Um die pulsierende Eingangsspannung auf eine konstante Ausgangsspannung umzusetzen, sind die beiden Wandler nötig, sodass die Gesamtanordnung relativ aufwändig ist.

Die US 5,847,949 A beschreibt in deren Fig. 1 einen DCDC-Wandler, welcher eine Eingangsspannung auf eine Ausgangspannung tiefsetzen kann, die an zwei Ausgängen gleichzeitig bereitgestellt wird. Diese herkömmliche Schaltung kann zwar die Eingangsspannung stufenlos tiefsetzen, bei einer Umsetzung auf 100% der Eingangsspannung müssen jedoch beide Schalter permanent mit hoher Frequenz getaktet werden, wodurch erhebliche Schaltverluste entstehen. Bei einer Umsetzung auf 50% der Eingangsspannung liegen beide Ausgänge in Serie, wobei deutliche Flussverluste entstehen, da der gesamte Laststrom seriell durch beide Dioden fließen muss.

Der Erfindung liegt die Aufgabe zugrunde, eine verbesserte Wechselrichterschaltung mit Tiefsetzsteller mit einem erhöhten Wirkungsgrad zu schaffen.

Diese Aufgabe wird gelöst durch eine Wechselrichterschaltung mit den Merkmalen des Anspruches 1. Vorteilhafte Ausgestaltungen und Weiterbildungen der Erfindung sind den Unteransprüchen zu entnehmen.

Der Erfindungsgedanke besteht darin, die Topologie des bekannten Tiefsetzstellers nach Fig. 1 grundsätzlich zu verändern, um bessere Eigenschaften zu erzielen. An den Eingang des erfindungsgemäßen Tiefsetzstellers ist eine Gleichspannungsquelle, z.B. ein Solargenerator, anschließbar, welche eine Gleichspannung als Eingangsspannung des Tiefsetzstellers bereitstellt. Der erfindungsgemäße Tiefsetzsteller verfügt über zwei oder mehr Ausgänge, welche vorzugsweise symmetrisch betrieben werden. An diesen Ausgängen kann jeweils eine Gleichspannung bereitgestellt werden, deren Wert kleiner oder gleich demjenigen der Eingangsspannung ist.

Die Ausgänge sind sowohl parallel als auch in Serie zueinander betreibbar. Dies schließt auch die Möglichkeit mit ein, dass die Ausgänge teilweise parallel und teilweise seriell betrieben werden. Außerdem kann zwischen den verschiedenen Zuständen schnell gewechselt werden.

Der so konzipierte Tiefsetzsteller hat gegenüber herkömmlichen Schaltungsanordnungen insbesondere die folgenden Vorteile:
- Die Verluste des Tiefsetzstellers sind deutlich geringer.
- Die Abhängigkeit der Verluste des Tiefsetzstellers von der z.B. von einem Solargenerator angelegten Eingangsspannung ist wesentlich geringer.
- Die Leistungshalbleiter der Schaltungsanordnung werden weniger stark belastet.
- Die Bauteile der Schaltungsanordnung können kleiner konfiguriert werden.

Insgesamt ergibt sich somit ein Tiefsetzsteller mit erhöhtem Wirkungsgrad und verbesserten Eigenschaften. Der erfindungsgemäße Tiefsetzsteller kann in besonders vorteilhafter Weise zum Bereitstellen einer Zwischenkreisspannung für einen Wechselrichter in einer Solaranlage eingesetzt werden.

Gemäß der Erfindung ist jeder der mehreren Ausgänge über eine durchgängige positive Zuleitung und eine durchgängige negative Zuleitung mit dem gemeinsamen Eingang verbunden; ist in der positiven Zuleitung und/oder der negativen Zuleitung jedes Ausganges wenigstens eine Drossel angeordnet; ist in der positiven Zuleitung und/oder der negativen Zuleitung jedes Ausganges wenigstens ein Schaltelement angeordnet; und sind die mehreren Ausgänge über jeweils wenigstens ein Gleichrichtelement in Serie geschaltet.

Zum Beispiel können die Ausgänge mittels der Schaltelemente über die Drosseln parallel mit der Gleichspannungsquelle am Eingang verbunden werden. Außerdem können die Ausgänge über diese Drosseln und die Gleichrichtelemente in Serie mit der Gleichspannungsquelle verbunden werden.

Wenn die Schaltelemente dauerhaft eingeschaltet sind, sind die Ausgänge statisch mit dem Eingang parallel geschaltet, d.h. die Spannungen am Eingang und an den Ausgängen sind gleich. Wenn die Schaltelemente dagegen dauerhaft ausgeschaltet sind, liegen die Ausgänge über die Gleichrichtelemente und die Drosseln in Serie. Bei n Ausgängen beträgt die Spannung an den Ausgängen dann den n-ten Teil der Eingangsspannung, falls die Ausgänge symmetrisch betrieben werden.

Sowohl bei statischer Serienschaltung als auch bei statischer Parallelschaltung der Ausgänge entstehen keine Schaltverluste in dem erfindungsgemäßen Tiefsetzsteller.

Im getakteten Betrieb werden die Schaltelemente periodisch geöffnet und geschlossen. Dabei sind verschiedenste Schaltzustände denkbar und die Schaltelemente müssen nicht notwendigerweise synchron schalten. Die Spannung an den Ausgängen liegt dann zwischen der vollen Eingangsspannung und deren n- ten Teil, wenn man von symmetrischen Ausgangsspannungen ausgeht. Das Tastverhältnis der Schaltelemente wird über eine Steuereinheit so geregelt, dass die gewünschte Spannung oder der gewünschte Strom am Eingang oder an den Ausgängen entsteht.

Im Gegensatz zum herkömmlichen Tiefsetzsteller nach Fig. 1 ist sowohl bei geöffneten als auch bei geschlossenen Schaltelementen ein Energiefluss von der Gleichspannungsquelle zu den Ausgängen des Tiefsetzstellers möglich. Dadurch ist die Energie, die in den Drosseln zwischengespeichert werden muss, bzw. die zirkulierende Blindleistung wesentlich kleiner. Daraus ergeben sich zahlreiche Vorteile:
- Die benötigten Drosseln sind wesentlich kleiner.
- Die Belastung der Halbleiter ist reduziert.
- Die Verluste sind deutlich reduziert. Dadurch steigt der Wirkungsgrad und die Kühlung ist einfacher.
- Die Abhängigkeit der Tiefsetzstellerverluste von der Spannung der Quelle ist wesentlich verringert.

Durch geeignete Dimensionierung und Platzierung der Drosseln, welche für den Fachmann leicht ersichtlich ist, kann erreicht werden, dass die Ausgänge auch im getakteten Betrieb ein konstantes Potenzial aufweisen, d.h. Potenzialsprünge zwischen dem Eingang und den Ausgängen und damit verbundene Funkstörungen können im Wesentlichen vermieden werden.

Die Schaltelemente des erfindungsgemäßen Tiefsetzstellers sind vorzugsweise Halbleiterschalter. Diese Halbleiterschalter sind vorzugsweise getaktet oder statisch betreibbar.

Die Schaltelemente des erfindungsgemäßen Tiefsetzstellers können vorzugsweise mit fester oder variabler Frequenz getaktet werden.

Die Schaltelemente des erfindungsgemäßen Tiefsetzstellers können vorzugsweise synchron oder asynchron zueinander getaktet werden.

Vorzugsweise ist zudem eine Steuerelektronik vorhanden, welche den Strom und/oder die Spannung am Eingang und/oder an den Ausgängen des Tiefsetzstellers regelt, indem sie die Taktung der Schaltelemente variiert.

Den Schaltelementen des erfindungsgemäßen Tiefsetzstellers sind vorzugsweise antiparallele Freilaufdioden parallel geschaltet.

Zudem sind vorzugsweise Maßnahmen bzw. Mittel zum stromlosen und/oder spannungslosen Schalten der Schaltelemente vorgesehen.

Die Gleichrichtelemente des erfindungsgemäßen Tiefsetzstellers sind vorzugsweise als Halbleiterdioden oder Synchrongleichrichter ausgeführt.

Vorzugsweise sind ferner Pufferkondensatoren parallel zum Eingang und/oder zu den Ausgängen des Tiefsetzstellers geschaltet.

Die Drosseln des Tiefsetzstellers können wahlweise separat, teilweise separat und teilweise miteinander gekoppelt oder vollständig miteinander gekoppelt sein.

Ferner sind vorzugsweise Schutzmaßnahmen vorgesehen, um im Fehlerfall eine Parallelschaltung der mehreren Ausgänge des Tiefsetzstellers der Erfindung mit dem Eingang zu verhindern.

In einer vorteilhaften Ausgestaltung der Erfindung sind zwei der Schaltelemente über zwei in Serie geschaltete weitere Gleichrichtelemente verbunden, wobei ein gemeinsamer Verbindungspunkt dieser beiden weiteren Gleichrichtelemente mit einem Hilfspotenzial verbunden ist. Dieses Hilfspotenzial kann vorzugsweise mittels einer Anzapfung der an den Eingang angeschlossenen Gleichspannungsquelle oder mittels wenigstens einen Kondensators bereitgestellt werden.

In einer vorteilhaften Ausgestaltung der Erfindung sind zwei der Drosseln über mit diesen jeweils in Serie geschaltete weitere Gleichrichtelemente parallel geschaltet.

In einer Ausgestaltung der Erfindung ist der Pluspol des ersten Ausganges mit dem Pluspol des Einganges verbunden, ist der Minuspol des letzten Ausganges mit dem Minuspol des Einganges verbunden, und weisen alle Ausgänge ein näherungsweise konstantes Potenzial gegenüber dem Eingang auf.

In einer weiteren vorteilhaften Ausgestaltung der Erfindung ist in Serie zu dem wenigstens einen Gleichrichtelement wenigstens ein weiteres Schaltelement geschaltet. Dabei ist vorzugsweise parallel zu den Ausgängen jeweils wenigstens ein weiteres Gleichrichtelement geschaltet, welches einen Freilauf der mit dem jeweiligen Ausgang verbundenen Drossel ermöglicht.

Diese Ausgestaltung der Schaltungsanordnung erweitert in vorteilhafter Weise den Betriebsbereich des erfindungsgemäßen Tiefsetzstellers.

Bei n Ausgängen können im symmetrischen Fall die Ausgangsspannungen minimal den n-ten Teil der Eingangsspannung betragen, da dann alle Ausgänge über die Drosseln und die Gleichrichtelemente in Serie mit dem Eingang verbunden sind. Um die Spannung an den Ausgängen weiter zu verringern, werden in die Verbindungen zwischen den Ausgängen, z.B. in Serie zu den Gleichrichtelementen, zusätzliche Schaltelemente eingefügt werden, welche normalerweise geschlossen sind. Werden diese zusätzlichen Schaltelemente periodisch geöffnet, so werden die einzelnen Ausgänge periodisch voneinander getrennt, wodurch der Energiezufluss von der Gleichspannungsquelle periodisch unterbrochen wird. Die Spannung an den Ausgängen sinkt dadurch wie gewünscht weiter ab und kann über das Tastverhältnis der zusätzlichen Schaltelemente eingestellt werden.

Solange die zusätzlichen Schaltelemente nicht vollständig ausgeschaltet sind, fließt immer noch periodisch Energie von der Quelle zu den Ausgängen, wobei in den Drosseln ein Teil der Energie gespeichert wird. Es muss dafür gesorgt werden, dass diese in den Drosseln enthaltene Energie sich abbauen kann. Dazu werden die zusätzlichen Gleichrichtelemente vorgesehen, welche einen Freilauf der Drosseln zu denjenigen Ausgängen hin ermöglichen, mit denen sie jeweils verbunden sind.

In einer vorteilhaften Weiterbildung der Erfindung sind das wenigstens eine Gleichrichtelement und das wenigstens eine weitere Gleichrichtelement als Synchrongleichrichter ausgeführt. In einer besonders vorteilhaften Alternative ist der Tiefsetzsteller bidirektional betreibbar.

Der Tiefsetzsteller der Erfindung ist in vorteilhafter Weise in Verbindung mit Energiespeichern, z.B. Akkus oder Superkondensatoren, betreibbar. Dabei ist beispielsweise ein mit dem Eingang des Tiefsetzstellers verbundener Energiespeicher als speisende Gleichstromquelle nutzbar.

Wenn die Gleichrichtelemente des Tiefsetzstellers als Synchrongleichrichter ausgeführt sind, ist es möglich, Energie bidirektional zu übertragen. Somit können z.B. am Eingang angeschlossene Energiespeicher sowohl geladen als auch entladen werden.

In einer noch weiteren vorteilhaften Ausgestaltung der Erfindung sind zusätzliche Schaltelemente zwischen den positiven und negativen Zuleitungen der Ausgänge vorgesehen, um die mehreren Ausgänge statisch in Serie oder parallel schalten zu können.

Schließlich können auch zwei oder mehr solche Tiefsetzsteller gemäß der Erfindung parallel oder in Serie betrieben werden. Die parallel betriebenen Tiefsetzsteller arbeiten dabei vorzugsweise im Multiphasenbetrieb, wobei weiter vorzugsweise einzelne Tiefsetzsteller zur Erhöhung des Wirkungsgrades bei Teillast abgeschaltet werden können.

Der Tiefsetzsteller der Erfindung ist in vorteilhafter Weise in einer Wechselrichterschaltung, insbesondere einer Solarwechselrichterschaltung, mit wenigstens einem Wechselrichter zum Umsetzen der von dem Tiefsetzsteller an den mehreren Ausgängen bereitgestellten Ausgangsspannungen in eine Wechselspannung eingesetzt, um so den Wirkungsgrad der gesamten Wechselrichterschaltung zu steigern.

Im Bereich der Solarwechselrichter ist es allgemein üblich, die stark variierende Spannung eines Solargenerators mittels eines Tiefsetzstellers auf eine näherungsweise konstante Spannung tiefzusetzen und damit einen angeschlossenen Wechselrichter zu betreiben. Der Wechselrichter braucht dann nicht für hohe Eingangsspannungen überdimensioniert werden und arbeitet mit optimalem Wirkungsgrad.

Der oben beschriebene Tiefsetzsteller der Erfindung hat zwar einen höheren Wirkungsgrad als ein herkömmlicher Tiefsetzsteller, er besitzt jedoch mindestens zwei Ausgänge, welche wegen ihrer Potenzialunterschiede nicht parallel geschaltet werden können. Deshalb muss die bekannte Reihenschaltung aus einem Tiefsetzsteller mit einem einzigen nachfolgenden Wechselrichter herkömmlicher Art modifiziert werden.

Die Struktur des Solarwechselrichters wird erfindungsgemäß so geändert, dass die an den Ausgängen des Tiefsetzstellers separat mit unterschiedlichen Potenzialen zur Verfügung gestellte Energie wieder zusammengeführt und in ein gemeinsames Netz eingespeist werden kann. Der damit verbundene Mehraufwand ist gegenüber dem Gewinn an Wirkungsgrad vernachlässigbar.

Eine Möglichkeit besteht darin, an jeden Ausgang des Tiefsetzstellers einen separaten Wechselrichter anzuschließen, wobei die Wechselrichter transformatorisch mit einem Netz (Stromnetz, Inselnetz) oder Verbraucher gekoppelt sind. Durch die transformatorische Kopplung können die Potenzialunterschiede zwischen den Tiefsetzstellerausgängen überbrückt werden. Diese Lösung eignet sich beispielsweise dann, wenn die Netzeinspeisung ins Mittelspannungsnetz erfolgen soll, wozu ohnehin ein Mittelspannungstrafo benötigt wird.

Eine zweite Möglichkeit besteht darin, einen oder mehrere potenzialüberbrückende DC/DC-Wandler zu verwenden, welche die Energie von den Ausgängen des Tiefsetzstellers über einen gemeinsamen Zwischenkreis und einen daraus gespeisten Wechselrichter ins Stromnetz einspeisen. Alternativ sind auch potenzialüberbrückende DC/AC-Wandler möglich, welche direkt ins Stromnetz einspeisen. Diese Lösung eignet sich, wenn ohnehin eine Potenzialtrennung innerhalb des Solarwechselrichters gewünscht ist.

Eine weitere Möglichkeit besteht darin, an jeden der mehreren Ausgänge des Tiefsetzstellers einen separaten Wechselrichter anzuschließen, wobei jeder dieser mehreren Wechselrichter einem Netz oder einem Verbraucher nur einen Anteil der benötigten Wechselspannung bereitstellt.

Eine noch weitere Möglichkeit besteht darin, an die mehreren Ausgänge des Tiefsetzstellers einen gemeinsamen Wechselrichter mit Mehrfacheingang anzuschließen.

Obige sowie weitere Merkmale, Vorteile und Anwendungsmöglichkeiten werden aus der nachfolgenden Beschreibung verschiedener bevorzugter Ausführungsbeispiele anhand der beiliegenden Zeichnungen besser verständlich. Darin zeigen:
- Fig. 1: ein schematisches Blockschaltbild zur Erläuterung einer Grundform eines herkömmlichen Tiefsetzstellers;
- Fig. 2: ein schematisches Blockschaltbild eines ersten Ausführungsbeispiels eines erfindungsgemäßen Tiefsetzstellers;
- Fig. 3: ein schematisches Blockschaltbild eines zweiten Ausführungsbeispiels eines erfindungsgemäßen Tiefsetzstellers;
- Fig. 4: ein schematisches Blockschaltbild eines dritten Ausführungsbeispiels eines erfindungsgemäßen Tiefsetzstellers;
- Fig. 5: ein schematisches Blockschaltbild einer Variante des Tiefsetzstellers von Fig. 2, ausgerüstet mit zusätzlichen Bauteilen zum statischen Überbrücken von Bauteilen;
- Fig. 6: ein schematisches Blockschaltbild einer Serienschaltung von Tiefsetzstellern von Fig. 2;
- Fig. 7: ein schematisches Blockschaltbild einer ersten Variante einer Erweiterung des Tiefsetzstellers von Fig. 2 auf drei Ausgänge;
- Fig. 8: ein schematisches Blockschaltbild einer zweiten Variante einer Erweiterung des Tiefsetzstellers von Fig. 2 auf drei Ausgänge;
- Fig. 9: ein schematisches Blockschaltbild einer Variante des Tiefsetzstellers von Fig. 2 mit einer Zusatzschaltung zur Erweiterung des Betriebsbereichs;
- Fig. 10: ein schematisches Blockschaltbild eines ersten Ausführungsbeispiels einer erfindungsgemäßen Wechselrichterschaltung;
- Fig. 11: ein schematisches Blockschaltbild eines zweiten Ausführungsbeispiels einer erfindungsgemäßen Wechselrichterschaltung;
- Fig. 12: ein schematisches Blockschaltbild einer erfindungsgemäßen Stromversorgungseinrichtung mit Energiespeicher; und
- Fig. 13: ein Diagramm zur Veranschaulichung des verbesserten Wirkungsgrades des erfindungsgemäßen Tiefsetzstellers im Vergleich zum Stand der Technik.

Die beschriebenen Varianten können jeweils für sich oder in vielen Fällen auch in Kombination miteinander umgesetzt werden.

Bei solchen Kombinationen ist es denkbar, dass je nach Betriebszustand, z.B. abhängig von der Höhe der Ein- oder Ausgangsspannung des Tiefsetzstellers zwischen verschiedenen Varianten umgeschaltet wird, z.B. indem die Schaltelemente der betreffenden Variante aktiv bzw. inaktiv geschaltet werden. Dadurch kann z.B. jeweils die Variante bzw. die Betriebsart ausgewählt werden, welche unter den gegebenen Randbedingungen den besten Wirkungsgrad aufweist.

Fig. 2 zeigt eine erste Ausführungsform des erfindungsgemäßen Tiefsetzstellers. Grundlegende Funktionen des erfindungsgemäßen Tiefsetzstellers und mögliche Ausgestaltungen in Detailfragen werden anhand dieses Beispiels nachfolgend näher erläutert.

Die speisende Quelle 10 liefert eine Gleichspannung. Als Quelle sind verschiedenste Gleichstromquellen denkbar, wie z.B. Solargeneratoren, Brennstoffzellen, thermoelektrische Generatoren, Akkus, Batterien, Superkondensatoren, elektromagnetische Generatoren, AC/DC-Wandler oder DC/DC-Wandler.

Die Gleichspannung der Quelle 10 wird mit dem Tiefsetzsteller (bestehend aus den Schaltelementen 14a, 14b, dem Gleichrichtelement 16 und den Drosseln 12a, 12b auf eine geringere Ausgangsspannung herabgesetzt, welche an zwei Ausgängen 24a, 24b gleichzeitig bereitgestellt wird.

Die Schaltelemente 14a, 14b können Leistungshalbleiter wie MOSFETs oder IGBTs sein. Den Schaltelementen 14a, 14b können intern oder extern Freilaufdioden antiparallel geschaltet sein. Diese schützen die Schaltelemente 14a, 14b vor Rückwärtsspannungen und ermöglichen einen Freilauf, falls der Tiefsetzsteller unsymmetrisch betrieben wird.

Zur Verringerung der Schaltverluste können zusätzlich Umschwingnetzwerke und dergleichen eingebaut sein, welche das Schalten der Schaltelemente 14a, 14b im Strom- oder/und Spannungsnulldurchgang ermöglichen.

Die Drosseln 12a und 12 b können gekoppelt oder separat sein.

Die Drosseln 12a, 12b können auch in den jeweils gegenüberliegenden Zuleitungszweig zu den jeweiligen Ausgangskondensatoren 22a, 22b verlegt werden. Sie können außerdem jeweils in zwei gleich oder verschieden große Teildrosseln gesplittet werden, wobei sich jeweils eine Teildrossel im positiven und eine Teildrossel im negativen Zuleitungszweig zum jeweiligen Ausgangskondensator 22a bzw. 22b befindet. Die Position der Drosseln 12a, 12b bestimmt das Potenzial, welches die Ausgänge 24a, 24b im getakteten Betrieb gegenüber der Quelle 10 aufweisen.

Um Funkstörungen zu vermeiden, wird die Position der Drosseln 12a, 12b bevorzugt so gewählt, dass die Potenziale der Ausgänge 24a, 24b gegenüber der Quelle 10 nicht springen, sondern konstant sind. Im Fall der Schaltung in Fig. 2 bedeutet dies, dass die Drosseln 12a, 12b wie gezeichnet positioniert sind. Beide Ausgänge sind dann an jeweils einem Pol fest mit der Quelle 10 verbunden, wodurch keine Potenzialsprünge zwischen dem Eingang und den Ausgängen auftreten können.

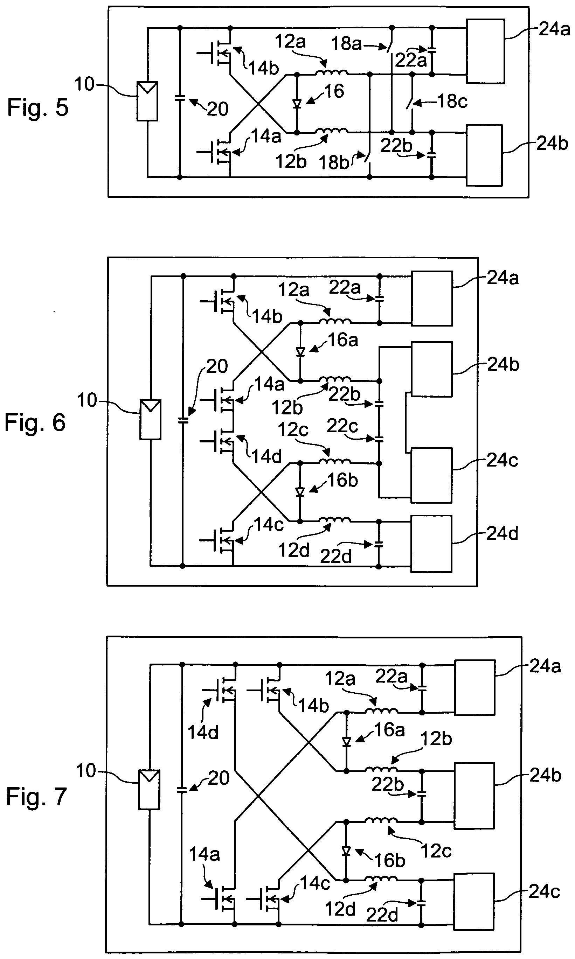

Bei anderen Ausführungsformen der Erfindung, welche weiter unten beschrieben sind (Fig. 6, 7, 8), müssen z.T. Drosseln zur Vermeidung von Potenzialsprüngen gesplittet werden.

Das Gleichrichtelement 16 kann z.B. eine Halbleiterdiode sein. Es kann aber auch durch ein aktives Schaltelement ersetzt werden (Synchrongleichrichter), um den Wirkungsgrad zu steigern.

Die dem Eingang bzw. den Ausgängen 24a, 24b parallel geschalteten Kondensatoren 20 und 22a, 22b dienen zur Pufferung der Rippleströme.

An den Ausgängen 24a, 24b können Verbraucher angeschlossen werden. Als Verbraucher sind auch Gleichspannungsnetze möglich oder Baugruppen, welche die Energie weiterreichen, z.B. Wechselrichter oder Batterieladegeräte. Beide Ausgänge 24a, 24b werden vorzugsweise mit gleicher Spannung und gleichem Strom gespeist, also symmetrisch betrieben. Es ist aber auch ein unsymmetrischer Betrieb denkbar.

Beide Ausgänge 24a, 24b sind über den Tiefsetzsteller derart verschaltet, dass sie bei geschlossenen Schaltelementen 14a, 14b über die Drosseln 12a, 12b parallel und bei offenen Schaltelementen 14a, 14b über das Gleichrichtelement 16 und die Drosseln 12a, 12b in Serie mit der Quelle 10 verbunden sind.

Beträgt die Spannung der Quelle 10 100% der Ausgangsspannung, so reicht eine statische Parallelschaltung der Ausgänge 24a, 24b aus, um die Ausgangsspannung zu liefern. Es entstehen dann keinerlei Schaltverluste.

Beträgt die Spannung der Quelle 10 200% der Ausgangsspannung, so reicht eine statische Serienschaltung der Ausgänge 24a, 24b aus, um die Ausgangsspannung zu liefern. Auch dann entstehen keinerlei Schaltverluste.

Liegt die Spannung der Quelle 10 zwischen 100% und 200% der Ausgangsspannung, so werden die Schaltelemente 14a, 14b getaktet betrieben. Das Tastverhältnis wird über eine Steuereinheit (nicht dargestellt) so geregelt, dass die gewünschte Spannung oder der gewünschte Strom an den Ausgängen 24a, 24b entsteht. Derartige Steuereinheiten sind Stand der Technik und werden als bekannt vorausgesetzt. Es kann auch auf Spannung oder Strom am Eingang geregelt werden. Dies wird z.B. häufig angewandt, wenn als Gleichspannungsquelle ein Solargenerator verwendet wird, welcher am Punkt maximaler Leistung betrieben werden soll. Das Tastverhältnis variiert zwischen 0% (statische Serienschaltung) und 100% (statische Parallelschaltung).

Bei unterschiedlichen Tastverhältnissen an den Schaltelementen 14a und 14b ist es möglich, die Ausgänge 24a, 24b unsymmetrisch zu belasten.

Beide Schaltelemente 14a, 14b werden vorzugsweise synchron getaktet. Auch asynchroner Betrieb ist denkbar. In diesem Fall ist eine Kopplung der Drosseln 12a, 12b in der Regel ungünstig.

Die Ansteuerung der Schaltelemente 14a, 14b kann mit fester oder variabler Frequenz erfolgen. Liegt die Spannung der Quelle 10 in der Nähe von 100% bzw. 200% der Ausgangsspannung, so kann z.B. die Frequenz abgesenkt werden, um die Schaltverluste zu verringern.

Im Folgenden werden weitere Ausführungsformen des erfindungsgemäßen Tiefsetzstellers beschrieben, wobei aber im Wesentlichen nur noch deren besondere Eigenschaften genannt werden. Trotzdem sind natürlich die bisher beschriebenen Detaillösungen wie z.B. der Ersatz von Gleichrichtelementen durch Synchrongleichrichter oder das Aufsplitten von Drosseln in vielen Fällen genauso umsetzbar.

Fig. 3 zeigt eine zweite Ausführungsform des erfindungsgemäßen Tiefsetzstellers.

Im Unterschied zur Schaltung in Fig. 2 sind weitere Gleichrichtelemente 17a, 17b eingebaut, welche mit einem Potenzial verbunden sind, das vorzugsweise symmetrisch in der Mitte zwischen den beiden Potenzialen des Eingangs liegt.

Dieses Potenzial kann z.B. über die Kondensatoren 20a, 20b erzeugt werden, welche in Serie zueinander und parallel zum Eingang geschaltet sind.

Es ist auch denkbar, dass die Quelle 10 selbst dieses Potenzial bereitstellt, z.B. in Form eines Mittelabgriffs.

Durch diese Maßnahme werden die Schaltelemente 14a, 14b vor transienten Überspannungen geschützt. Dadurch kann die Spannungsfestigkeit der Schaltelemente 14a, 14b auf die Hälfte der maximalen Quellenspannung reduziert werden.

Die Schaltelemente 14a, 14b können synchron oder asynchron getaktet werden.

Die weiteren Gleichrichtelemente 17a, 17b können alternativ oder zusätzlich zum Gleichrichtelement 16 eingesetzt werden. Dieses führt dann den Hauptstrom, während die Gleichrichtelemente 17a, 17b nur als Überspannungsschutz für die Schaltelemente 14a, 14b dienen.

Fig. 4 zeigt eine dritte Ausführungsform des erfindungsgemäßen Tiefsetzstellers.

Im Unterschied zur Schaltung in Fig. 2 sind weitere Gleichrichtelemente 17c, 17d eingebaut, welche einen Freilauf der Drosseln 12a, 12b direkt zu den Ausgängen 24a, 24b hin ermöglichen, wobei beide Drosseln 12a, 12b parallel betreibbar sind.

Durch diese Maßnahme werden die Schaltelemente 14a, 14b vor transienten Überspannungen geschützt. Dadurch kann die Spannungsfestigkeit der Schaltelemente 14a, 14b auf die Größe der Ausgangsspannung reduziert werden.

Die Schaltelemente 14a, 14b können synchron oder asynchron getaktet werden.

Im Vergleich zu den Schaltungen nach Fig. 2 und 3 ergeben sich durch die veränderte Anbindung der weiteren Gleichrichtelemente 17c, 17d einige Unterschiede:
- Diese Schaltungsvariante kann bei der Dimensionierung der Bauteile und im Wirkungsgrad Vorteile bringen, z.B. wenn die Ausgangsleistungen konstant sind, aber die Ausgangsspannungen veränderbar sein sollen. In diesem Fall sind die Ausgangsströme umso höher, je geringer die Ausgangsspannungen sind. Bei geringen Ausgangsspannungen sind aber die Ausgänge 24a, 24b überwiegend in Serie geschaltet. Beide Drosseln 12a, 12b können beim Freilauf bzw. bei Serienschaltung der Ausgänge parallel statt in Serie betrieben werden. Dadurch teilt sich der bei kleinen Ausgangsspannungen erhöhte Ausgangsstrom vermehrt auf die Drosseln 12a, 12b auf. Es kann gezeigt werden, dass durch diesen gegenläufigen Effekt der Strom in den einzelnen Drosseln 12a, 12b näherungsweise konstant bleibt. Somit ist der maximal in den Drosseln 12a, 12b auftretende Strom wesentlich reduziert, wodurch auch die Baugröße der Drosseln 12a, 12b reduziert werden kann. Außerdem ist auch die maximale Strom-belastung der Schaltelemente 14a, 14b und der zusätzlichen Gleich¬richtelemente 17c, 17d verringert.
- Während des Freilaufs liegen an den Drosseln 12a, 12b größere Spannungen an, d.h. die Induktivität der Drosseln 12a, 12b sollte etwas vergrößert werden.
- Die Spannungshübe an den Schaltelementen 14a, 14b sind in der Regel größer, deshalb steigen dort die Verluste.
- Das Tastverhältnis bei der Ansteuerung der Schaltelemente 14a, 14b ist bei sonst gleichen Bedingungen etwas verändert.

Die zusätzlichen Gleichrichtelemente 17c, 17d können alternativ oder auch zusätzlich zum Gleichrichtelement 16 eingesetzt werden. Das Gleichrichtelement 16 führt dann den Hauptstrom, während die weiteren Gleichrichtelemente 17c, 17d nur als Überspannungsschutz für die Schaltelemente 14a, 14b dienen. Die Schaltung verhält sich aber dann wieder im Wesentlichen gleich wie die Schaltungen nach Fig. 2 oder 3.

Fig. 5 zeigt eine Variante der ersten Ausführungsform des erfindungsgemäßen Tiefsetzstellers von Fig. 2, ausgerüstet mit zusätzlichen Bauteilen zum statischen Überbrücken von Bauteilen.

Bei statischem Betrieb (Parallel- bzw. Serienschaltung der Ausgänge) können Bauteile überbrückt werden, um den Wirkungsgrad zu steigern. Dies kann z.B. mit Hilfe der weiteren Schaltelemente 18a, 18b, 18c erfolgen. Dies können z.B. Relais oder Halbleiterschalter sein. Im Fall von Bauteil 18c kann auch eine Diode eingesetzt werden, wobei vorzugsweise eine Diode mit sehr niedriger Flussspannung verwendet wird.

### Parallelschaltung von Tiefsetzstellern

Zwei oder mehrere der erfindungsgemäßen Tiefsetzsteller können parallel geschaltet werden. In diesem Fall können die einzelnen Tiefsetzsteller phasenversetzt betrieben werden, um die Ripplesströme am Eingang und an den Ausgängen 24a, 24b zu verringern (Multiphase-Betrieb). Außerdem können bei Teillast einzelne Tiefsetzsteller ganz abgeschaltet werden, um den Teillastwirkungsgrad zu erhöhen.

### Serienschaltung von Tiefsetzstellern

Fig. 6 zeigt die Serienschaltung der ersten Ausführungsform des erfindungsgemäßen Tiefsetzstellers.

Zwei oder mehrere Tiefsetzsteller können in Serie geschaltet werden. In diesem Fall ist es zusätzlich möglich, Bauelemente einzusparen:
- Die Schaltelemente 14a, 14d, können zu einem zusammengefasst werden.
- Die Pufferkondensatoren 22b, 22c können zu einem Pufferkondensator zusammengefasst werden.
- Die Drosseln 12b, 12c können zu einer Drossel zusammengefasst werden, welche am Ort der Drossel 12b oder 12c liegt. Das hat allerdings den Nachteil, dass das Potenzial der Ausgänge 24b, 24c gegenüber der Quelle 10 springt, was Funkstörungen verursachen kann. Es ist deshalb besser, die Drosseln 12b, 12c nicht zusammenzufassen sondern gleich groß zu wählen, damit an beiden Drosseln 12b, 12c symmetrische Spannungsabfälle auftreten und das Potenzial der Ausgänge 24b, 24c ruhig bleibt.
- Die Drosseln 12a - 12d können separat, teilweise separat oder vollständig miteinander gekoppelt sein.
- Die Ausgänge 24b, 24c können zusammengefasst werden.

Erweiterung des relativen Eingangsspannungsbereichs durch Erweiterung auf mehr als zwei Quellen
Der relative Eingangsspannungsbereich, der bei den Schaltungen nach Fig. 2 bis 5 1:2 bzw. 100 ... 200% der Ausgangsspannung beträgt, lässt sich beliebig vergrößern, indem die Zahl der Ausgänge erhöht wird. Dazu wird der erfindungsgemäße Tiefsetzsteller so erweitert, dass alle Ausgänge sowohl parallel als auch seriell mit der Gleichspannungsquelle 10 verschaltet werden können.

Fig. 7 zeigt eine erste Variante einer Erweiterung der ersten Ausführungsform des erfindungsgemäßen Tiefsetzstellers auf drei Eingänge.

Alle drei Ausgänge 24a, 24b, 24c werden vorzugsweise symmetrisch betrieben, erhalten also dieselbe Ausgangsspannung und denselben Ausgangsstrom.

Durch Einschalten der Schaltelemente 14a - 14d können die Ausgänge 24a - 24c über die Drosseln 12a - 12d parallel zur Quelle 10 geschaltet werden. Außerdem sind die Ausgänge 24a - 24c über die Gleichrichtelemente 16a, 16b und die Drosseln 12a - 12d in Serie miteinander verbunden.

Beträgt die Spannung der Quelle 10 100% der Ausgangsspannung, so reicht eine statische Parallelschaltung der Ausgänge 24a - 24c aus, um diese mit der passenden Ausgangsspannung zu versorgen. Beträgt die Spannung der Quelle 10 300% der Ausgangsspannung, so reicht eine statische Serienschaltung der Ausgänge 24a - 24c aus, um diese mit der passenden Ausgangsspannung zu versorgen.

Liegt die Spannung der Quelle 10 zwischen 100% und 300% der Ausgangsspannung, so werden die Schaltelemente 14a - 14d getaktet betrieben, vorzugsweise synchron. Damit ergibt sich ein erweiterter Eingangsspannungsbereich von 1:3 bzw. 100 ... 300% der Ausgangsspannung, was bei Quellen mit stark variierender Spannung vorteilhaft sein kann.

Für jeden Ausgang 24a - 24c wird nur eine Drossel benötigt. Es ist jedoch vorteilhaft, die Drossel für den Verbraucher 24b zu splitten, wie in Fig. 7 gezeigt. Dadurch wird erreicht, dass der Ausgang 24b wie auch die Ausgänge 24a und 24c auf konstantem Potenzial gegenüber der Gleichspannungsquelle 10 liegen. Dadurch können Störaussendungen verringert werden.

Nach diesem gezeigten Schema kann der erfindungsgemäße Tiefsetzsteller auf n Ausgänge erweitert werden, wobei der relative Eingangsspannungsbereich auf 1:n erhöht wird. Je mehr Ausgänge vorhanden sind, desto größer wird der relative Eingangsspannungsbereich. Allerdings sinkt der Wirkungsgrad.

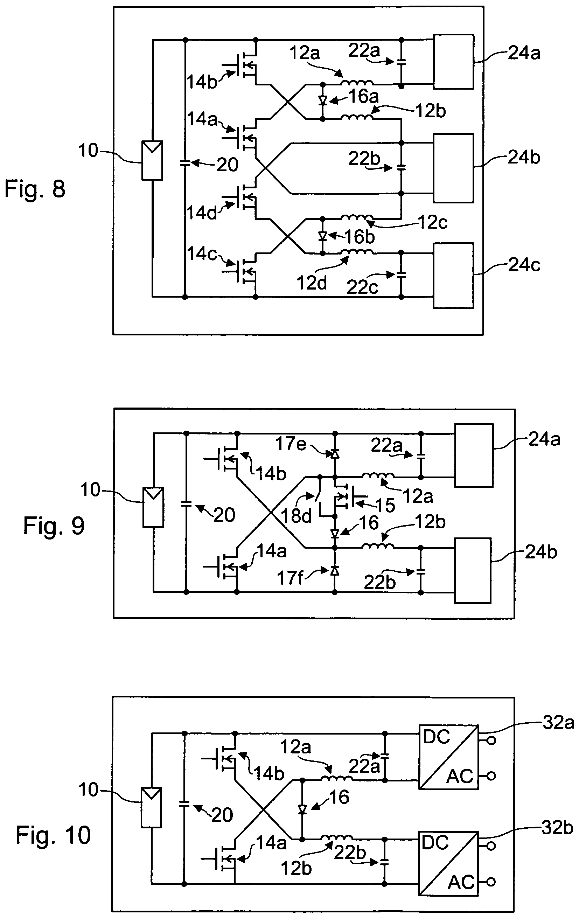

Fig. 8 zeigt eine zweite Variante einer Erweiterung der ersten Ausführungsform des erfindungsgemäßen Tiefsetzstellers auf drei Eingänge.

Alternativ können die Schaltelemente 14a, 14d auch zum mittleren Ausgang 24b hin statt direkt zur Quelle 10 hin verschaltet werden. Die Parallelverschaltung des Ausganges 24a mit der Quelle 10 erfolgt dann über die Schaltelemente 14a, 14c und die Drosseln 12a, 12c. Analoges gilt für den dritten Ausgang 24c.

Erweiterung des Betriebsbereichs durch eine Zusatzschaltung
Bei fehlender Belastung durch Verbraucher kann es vorkommen, dass die Quelle eine sehr hohe Leerlaufspannung aufweist. Dieser Fall tritt z.B. bei Solargeneratoren auf, v.a. bei Dünnschichtmodulen.

In diesem Fall kann es vorkommen, dass die Teilung der Eingangsspannung durch die statische Reihenschaltung der Ausgänge nicht ausreicht und die Spannung an den Ausgängen immer noch zu hoch ist. Um den relativen Eingangsspannungsbereich zu erweitern bzw. die minimale Ausgangsspannung zu senken, kann man die Anzahl der Ausgänge erhöhen, wie oben beschrieben. Es gibt aber noch eine weitere Methode, bei der die Anzahl der Ausgänge nicht erhöht werden muss.

Der erfindungsgemäße Tiefsetzsteller kann um zusätzliche Bauelemente erweitert werden, welche es ermöglichen, die Spannung der Quelle 10 weiter und sogar bis auf Null herabzusetzen.

Fig. 9 zeigt die erste Ausführungsform des erfindungsgemäßen Tiefsetzstellers von Fig. 2, kombiniert mit einer Zusatzschaltung zur Erweiterung des Betriebsbereichs.

Die Schaltung aus Fig. 2 wird erweitert um die weiteren Gleichrichtelemente 17e, 17f, das weitere Schaltelement 15 und das Überbrückungselement 18d.

Die weiteren Gleichrichtelemente 17e, 17f werden so in die vorhandene Schaltung eingefügt, dass ein direkter Freilauf der Drosseln 12a, 12b zu den jeweils mit ihnen verbundenen Ausgängen 24a, 24b ermöglicht wird. Die weiteren Gleichrichtelemente 17e, 17f können auch durch aktive Schaltelemente ersetzt werden (Synchrongleichrichter).

Das weitere Schaltelement 15 ist vorzugsweise ein Halbleiterschalter und kann über eine antiparallele Diode verfügen. Das Überbrückungselement 18d liegt parallel zum weiteren Schaltelement 15. Es kann ein Relaiskontakt sein und ist nicht unbedingt erforderlich. Es dient zur statischen Überbrückung des weiteren Schaltelements 15, womit dessen Durchlassverluste im statischen Ein-Zustand beseitigt werden. Das weitere Schaltelement 15 und das Überbrückungselement 18d werden in Reihe zum vorhandenen Gleichrichtelement 16 eingebaut.

Beträgt die Spannung der Quelle 10 100 ... 200% der Ausgangsspannung, so ist das Überbrückungselement 18d bzw. das weitere Schaltelement 15 geschlossen und die Schaltung arbeitet wie die Schaltung nach Fig. 2.

Ist die Spannung der Quelle 10 größer als 200% der Ausgangsspannung, so werden die Schaltelemente 14a, 14b dauerhaft ausgeschaltet. Das Überbrückungselement 18d wird dauerhaft geöffnet. Das weitere Schaltelement 15 wird periodisch getaktet. Bei eingeschaltetem weiteren Schaltelement 15 fließt der Strom in Serie durch die an die Ausgänge 24a, 24b angeschlossenen Verbraucher, die Drosseln 12a, 12b, das Gleichrichtelement 16 und das weitere Schaltelement 15.

Bei ausgeschaltetem weiteren Schaltelement 15 fließt der Strom in der Drossel 12a über das weitere Gleichrichtelement 17e zurück zum Ausgang 24a. Ebenso fließt der Strom in der Drossel 12b über das weitere Gleichrichtelement 17f zurück zum Ausgang 24b (nach der Art eines klassischen Tiefsetzstellers).

Je kleiner das Tastverhältnis des weiteren Schaltelements 15 ist, desto stärker wird die Spannung der Quelle 10 herabgesetzt. Geht das Tastverhältnis gegen Null, so sinken auch die Ausgangsspannungen auf Null ab.

Durch Variation des Tastverhältnisses des weiteren Schaltelements 15, z.B. mit Hilfe einer Steuereinheit, können die Spannungen bzw. Ströme am Eingang bzw. an den Ausgängen 24a, 24b geregelt werden.

Die gezeigte Erweiterungsschaltung kann ebenso in analoger Weise für andere Ausführungsformen des erfindungsgemäßen Tiefsetzstellers eingesetzt werden, was für den Fachmann leicht ersichtlich ist.

Bei den Schaltungen nach. Fig. 3 und 4 muss z.B. jedem weiteren Gleichrichtelement 17a .. d (und ggf. 16, falls vorhanden) ein weiteres Schaltelement 15 in Reihe geschaltet werden. Da in diesen Fällen mindestens zwei weitere Schaltelemente 15 vorhanden sind, können diese asynchron getaktet werden, womit ein unsymmetrischer Betrieb der Ausgänge 24a, 24b ermöglicht wird. In diesem Fall ist eine Kopplung der Drosseln 12a, 12b in der Regel ungünstig.

### Schutzmaßnahmen

Bei hoher Spannung der Gleichspannungsquelle 10 kann es bei Defekt eines oder mehrerer Schaltelemente (14a - 14d) zu einer ungewollten Parallelschaltung der Ausgänge 24a .. d und damit zu einer unzulässig hohen Ausgangsspannung kommen.

Um dies zu verhindern, können Schutzvorrichtungen eingebaut werden, welche im Fehlerfall Strompfade unterbrechen oder kurzschließen. Dazu gibt es vielfache Möglichkeiten, z.B:
- Kurzschluss der Quelle 10 (v. a. bei Quellen mit geringem Kurzschlussstrom wie z.B. Solargeneratoren);
- Thyristorschaltungen ("Crowbar"-Schaltungen), evtl. in Verbindung mit Sicherungen;
- Abtrennung der Quelle 10 mittels Halbleiter oder Relais.

Da Relais kleine Durchlassverluste aufweisen, sind sie besser geeignet als Halbleiter. Allerdings schalten sie langsam und es können sich Lichtbögen an den Kontakten bilden. Um dem entgegenzuwirken, kann man Relais mit Halbleitern kombinieren. Zum Beispiel können Relais und Halbleiter parallel geschaltet werden. Zuerst öffnet das Relais, während der Halbleiter noch leitet. Dann öffnet der Halbleiter. Damit werden Lichtbogen am Relaiskontakt verhindert. Es ist auch denkbar, die Quelle mit einem Halbleiter kurzzuschließen, dann die Quelle mittels Relais abzutrennen und schließlich den Halbleiter wieder zu öffnen, um eine Dauerbelastung der Quelle zu verhindern.

Die Schutzmaßnahmen können auch an anderer Stelle in der Schaltung als an der Quelle umgesetzt werden.

Verwendung des erfindungsgemäßen Tiefsetzstellers in Wechselrichtern.

Der Tiefsetzsteller kann neben der direkten Speisung von Gleichstromverbrauchern oder Gleichstromnetzen auch zur Speisung von Gleichspannungs-Zwischenkreisen in anderen Geräten wie z.B. Wechselrichtern genutzt werden.

Ein Wechselrichter braucht zur Erzeugung einer Wechselspannung in der Regel eine Zwischenkreisspannung von einer bestimmten Höhe. Ein optimaler Wirkungsgrad wird erreicht, wenn die Zwischenkreisspannung genau auf die zu erzeugende Wechselspannung angepasst ist.

Wechselrichter werden häufig zur solaren Stromversorgung eingesetzt. Solargeneratoren liefern abhängig von Lichteinfall, Temperatur und Anzahl der verschalteten Module eine stark schwankende Gleichspannung. Je breiter der Bereich der Eingangs-Gleichspannung, die ein Wechselrichter verarbeiten kann, desto mehr Möglichkeiten hat der Installateur, passende Solarmodulkombinationen zu finden. Ein Eingangsspannungs-Bereich von 1:2 bei voller Last (bzw. 1:2,5 von Volllast bis Leerlauf) ist wünschenswert.

Zur Anpassung des Solargenerators an den Wechselrichter wird daher in einigen Fällen ein Tiefsetzsteller verwendet. Dieser kann die variierende Gleichspannung des Solargenerators auf eine näherungsweise konstante Zwischenkreisspannung tiefsetzen. Es ist auch möglich, die Zwischenkreisspannung mit einem überlagerten Wechselanteil zu modulieren, was für die optimale Anpassung des Wechselrichters von Vorteil sein kann.

Da in Zukunft höhere Systemspannungen bei Solargeneratoren zu erwarten sind, wird sich der Einsatzbereich von Tiefsetzstellern vermutlich erweitern.

Der erfindungsgemäße Tiefsetzsteller hat gegenüber dem Stand der Technik einen wesentlich höheren und konstanteren Wirkungsgrad bei gleichzeitig verringertem Volumen, Gewicht und Kosten. Zudem ist es möglich, die Potenziale an seinem Eingang gegenüber den Ausgängen konstant zu halten, indem die Drosseln im Tiefsetzsteller wie erwähnt passend positioniert und dimensioniert werden. Dies ist vorteilhaft, weil das Potenzial eines Solargenerators aus Gründen der elektromagnetischen Verträglichkeit keine hochfrequenten Sprünge aufweisen sollte.

In Verbindung mit dem erfindungsgemäßen Tiefsetzsteller können verschiedene Wechselrichter-Topologien eingesetzt werden. Es können sowohl einphasige als auch mehrphasige Wechselrichter verwendet werden. Es können Wechselrichter zur Speisung von Inselnetzen oder zur Einspeisung in ein Stromnetz verwendet werden.

Der erfindungsgemäße Tiefsetzsteller kann dazu verwendet werden, ein Maximum-Power-Point-Tracking des Solargenerators auszuführen. Wenn die Spannung des Solargenerators sehr hoch ist, kann der Tiefsetzsteller auf statische Serienschaltung der Ausgänge geschaltet werden. Die Spannung des Solargenerators wird dann über die Serienschaltung der Ausgänge geteilt und ungeregelt an die nachfolgende Schaltung weitergeleitet. In diesem Fall kann letztere das Tracking übernehmen.

Der erfindungsgemäße Tiefsetzsteller besitzt jedoch mindestens zwei Ausgänge, welche wegen ihrer Potenzialunterschiede nicht direkt parallel geschaltet und einem gemeinsamen Wechselrichter zugeführt werden können. Somit ist die bekannte Reihenschaltung von einem Tiefsetzsteller mit einem einzigen nach¬folgenden Wechselrichter herkömmlicher Art nicht anwendbar.

Deshalb wird die Struktur des Solarwechselrichters erfindungsgemäß so geändert, dass die an den Ausgängen des Tiefsetzstellers separat mit unterschied¬lichen Potenzialen zur Verfügung gestellte Energie wieder zusammengeführt und in ein gemeinsames Netz eingespeist werden kann. Der damit verbundene Mehraufwand ist gegenüber dem Gewinn an Wirkungsgrad vernachlässigbar, wenn - wie im Folgenden gezeigt - bestimmte Rahmenbedingungen gegeben sind.

Fig. 10 zeigt eine erfindungsgemäße VVechselrichteranordnung in einer ersten Ausführungsform.

In der Wechselrichteranordnung nach Fig. 10 werden durch die Ausgänge eines Tiefsetzstellers nach Fig. 2 zwei separate Wechselrichter 32a, 32b gespeist. Diese können über je einen separaten oder einen gemeinsamen Transformator in das Stromnetz einspeisen. Durch die transformatorische Kopplung können die Potenzialunterschiede zwischen den Tiefsetzstellerausgängen überbrückt werden.

Es ist möglich, dass die Wechselrichter in verschiedene Phasen einspeisen.

Wird ein Tiefsetzsteller mit drei Ausgängen verwendet, so können drei Wechselrichter angeschlossen werden. Dadurch ist eine dreiphasige Einspeisung möglich.

Diese Lösung eignet sich beispielsweise, wenn die Netzeinspeisung ins Mittelspannungsnetz erfolgen soll, wozu ohnehin ein Mittelspannungstrafo benötigt wird.

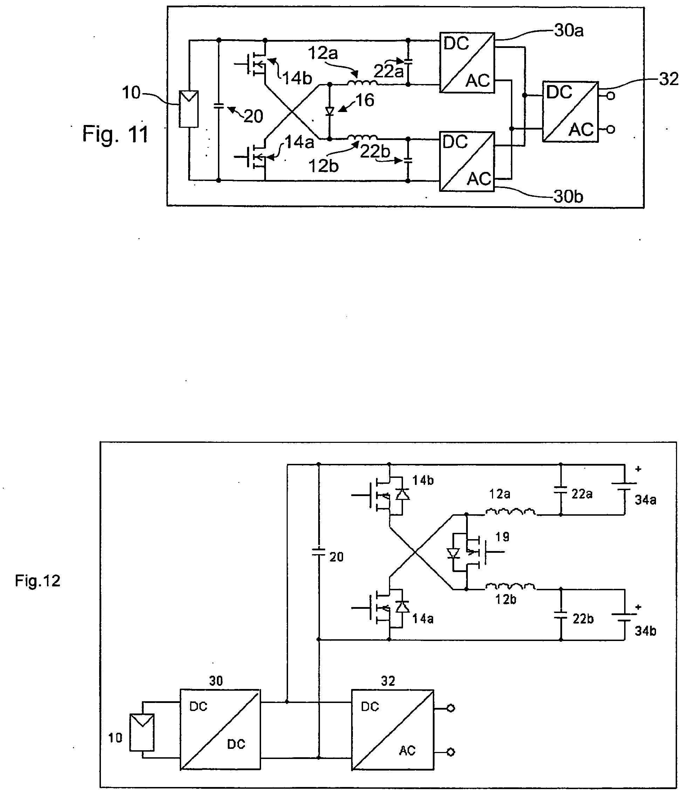

Fig. 11 zeigt eine erfindungsgemäße Wechselrichteranordnung in einer zweiten Ausführungsform:
In der Wechselrichteranordnung nach Fig. 11 werden durch die Ausgänge 24a, 24b eines Tiefsetzstellers nach Fig. 2 zwei separate DC/DC-Wandler 30a, 30b gespeist, welche über einen gemeinsamen Zwischenkreis einen Wechselrichter 32 speisen. Mit Hilfe der DC/DC-Wandler 30a, 30b können die unterschiedlichen Potenziale an den Ausgängen 24a, 24b überbrückt werden.

Statt separater DC/DC-Wandler 30a, 30b kann auch ein gemeinsamer DC/DC-Wandler mit Mehrfacheingang verwendet werden.

Diese Lösung eignet sich, wenn ohnehin eine Potenzialtrennung innerhalb des Solarwechselrichters gewünscht ist.

In einer dritten Ausführungsform der erfindungsgemäßen Wechselrichteranordnung wird als Wechselrichter ein potenzialüberbrückender DC/AC-Wandler mit Mehrfacheingang verwendet, wobei dessen Eingänge mit den Ausgängen eines erfindungsgemäßen Tiefsetzstellers verbunden sind. Ein solcher Wandler kann z.B. aus einem Sperrwandler mit mehreren Eingängen und einer nachfolgenden Polwendeschaltung aufgebaut sein.

Diese Lösung eignet sich ebenfalls, wenn ohnehin eine Potenzialtrennung innerhalb des Solarwechselrichters gewünscht ist.

In einer vierten Ausführungsform der erfindungsgemäßen Wechselrichteranordnung wird mit zwei Ausgängen eines erfindungsgemäßen Tiefsetzstellers jeweils ein potenzialüberbrückender DC/AC-Wandler verbunden, wobei jeder dieser DC/AC-Wandler nur jeweils eine (positive oder negative) Halbwelle des Netzstroms erzeugt. Im Verbund beider DC/AC-Wandler entsteht dann eine komplette Sinuswelle, welche in ein Wechselstromnetz eingespeist werden kann.

Diese Lösung eignet sich ebenfalls, wenn ohnehin eine Potenzialtrennung innerhalb des Solarwechselrichters gewünscht ist.

Fig. 12 zeigt eine Anwendung, bei der der Tiefsetzsteller in Verbindung mit Energiespeichern betrieben werden kann.

Ein Wechselrichter 32 formt die von einem Solargenerator 10 gelieferte Energie in Wechselspannung um. Zur Anpassung der Spannung des Solargenerators 10 an den Wechselrichter 32 kann ein DCDC-Wandler 30 zwischengeschaltet sein, welcher eine für den Wechselrichter 32 geeignete Zwischenkreisspannung an seinem Ausgang bereitstellt.

Häufig ist es gewünscht, überschüssige Solarenergie zwischenzuspeichern und zu einem späteren Zeitpunkt wieder abzurufen. Zur Energiespeicherung werden z.B. Akkus oder Superkondensatoren verwendet. Diese müssen so an das restliche System angekoppelt werden, dass sie kontrolliert geladen und entladen werden können. Dazu werden häufig Wandler verwendet. \

Da die Energie den Wandler sowohl beim Laden als auch beim Entladen des Energiespeichers passiert, machen sich die Verluste des Wandlers in der Gesamtenergiebilanz doppelt bemerkbar. Deshalb ist es wichtig, einen Wandler mit möglichst hohem Wirkungsgrad einzusetzen.

Zur Ankopplung des Energiespeichers an das Stromversorgungsystem wird deshalb in Fig. 12 ein erfindungsgemäßer Tiefsetzsteller verwendet, wobei beispielhaft die Schaltungsvariante analog zu Fig. 2 gezeigt ist. Als Gleichrichtelement 16 wurde dabei ein Synchrongleichrichter 19 verwendet. Die Schaltelemente 14a und 14b enthalten antiparallele Freilaufdioden. Somit kann der Tiefsetzsteller bidirektional betrieben werden, um den Energiespeicher nicht nur zu laden, sondern auch zu entladen.

Der Energiespeicher besteht in diesem Fall aus zwei vorzugsweise identischen Akkus 34a, 34b, welche mit den Ausgängen des Tiefsetzstellers verbunden sind. Die Ankopplung an das Stromversorgungssystem erfolgt bevorzugt über den Zwischenkreis des Wechselrichters 32, da dessen Spannung in der Regel relativ konstant ist. Somit kann dem Zwischenkreis Energie entnommen und in den Akkus 34a, 34b gespeichert werden, z.B. bei hoher Sonneneinstrahlung. Umkehrt kann Energie von den Akkus 34a, 34b in den Zwischenkreis bzw. ins Netz übertragen werden, z.B. bei fehlender Einstrahlung. Ist der Wechselrichter 32 in der Lage, bidirektional zu arbeiten, so kann auch Überschussenergie aus dem Netz zwischengespeichert werden.

Durch asymmetrische Ansteuerung der Schaltelemente 14a, 14b ist es möglich, die Akkus 34a, 34b asymmetrisch zu betreiben um z.B. Unsymmetrien in deren Ladezustand auszubalancieren.

Wird ein Tiefsetzsteller nach Fig. 3 verwendet, und verfügt der Wechselrichter über einen Zwischenkreis mit Mittelpunktsanzapfung, so können beide Mittelpunkte miteinander verbunden werden. In diesem Fall ist es z.B. möglich, Asymmetrien zwischen dem positiven und dem negativen Teil des Zwischen¬kreises oder zwischen den beiden Akkus 34a, 34b durch den Wechselrichter und/oder durch den Tiefsetzsteller auszugleichen.

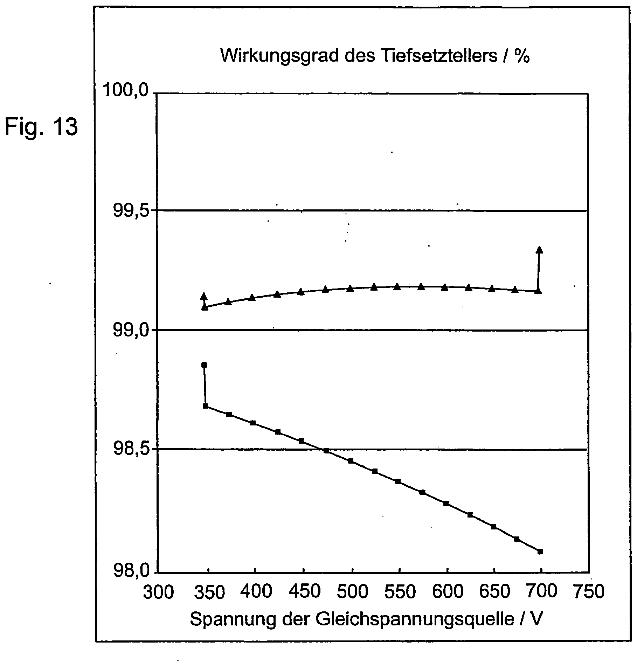

Fig. 13 zeigt den berechneten Wirkungsgradverlauf des in Fig. 2 gezeigten erfindungsgemäßen Tiefsetzstellers in Abhängigkeit von der Quellenspannung (obere Kurve). Zum Vergleich dazu zeigt die untere Kurve den Wirkungsgrad eines Tiefsetzstellers nach Fig. 1 bzw. dem Stand der Technik.

Bei der Berechnung wurden eine Ausgangsspannung von jeweils 350 V, eine konstante Eingangsleistung und ein Betrieb mit konstanter Taktfrequenz zugrunde gelegt.

Bei 350 V Quellenspannung takten beide Tiefsetzsteller nicht, wodurch die Schaltverluste entfallen und der Wirkungsgrad entsprechend erhöht ist.

Beim Tiefsetzsteller nach Fig. 2 ist dies auch bei 700 V Quellenspannung möglich, durch die statische Serienschaltung der beiden Ausgänge.

### Bezugszeichenliste:

- 10: Gleichspannungsquelle
- 12, 12a..d: Drossel
- 14, 14a..d: Schaltelement
- 15: weiteres Schaltelement
- 16, 16a, 16b: Gleichrichtelement
- 17a, 17b: weiteres Gleichrichtelement.,
- 17c, 17d: weiteres Gleichrichtelement
- 17e, 17f: weiteres Gleichrichtelement
- 18a..c: zusätzliches Schaltelement
- 20, 20a, 20b: Pufferkondensator am Eingang
- 22, 22a..d: Pufferköndehsator an einem Ausgang
- 24, 24a..d: Ausgang
- 30a, 30b: DC/DC-Wandler
- 32, 32a, 32b: Wechselrichter

## Patentansprüche

1. Wechselrichterschaltung, aufweisend:
einen Tiefsetzsteller, mit
einem gemeinsamen Eingang, an welchem eine Gleichspannungsquelle (10) zum Anlegen einer Eingangsspannung anschließbar ist; und
zwei oder mehr Ausgängen (24a, 24b, 24c, 24d), an welchen jeweils eine Gleichspannung bereitgestellt werden kann, deren Wert kleiner oder gleich demjenigen der Eingangsspannung ist, wobei
jeder der mehreren Ausgänge (24a, 24b, 24c, 24d) über eine positive Zuleitung und eine negative Zuleitung mit dem gemeinsamen Eingang verbunden ist,
in der positiven Zuleitung und/oder der negativen Zuleitung jedes Ausganges (24a, 24b, 24c, 24d) wenigstens eine Drossel (12a, 12b, 12c, 12d) angeordnet ist,
die mehreren Ausgänge (24a, 24b, 24c, 24d) über jeweils wenigstens ein Gleichrichtelement (16, 16a, 16b) in Serie geschaltet sind, und
in der positiven Zuleitung und/oder der negativen Zuleitung jedes Ausganges (24a, 24b, 24c, 24d) wenigstens ein Schaltelement (14a, 14b, 14c, 14d) angeordnet ist, sodass die Ausgänge (24a, 24b, 24c, 24d) sowohl parallel zueinander als auch in Serie zueinander betreibbar sind; und
wenigstens einen Wechselrichter (32, 32a, 32b) zum Umsetzen der vom Tiefsetzsteller an den mehreren Ausgängen (24a, 24b, 24c, 24d) bereitgestellten Ausgangsspannungen in eine Wechselspannung, wobei der wenigstens eine Wechselrichter (32, 32a, 32b) an einen oder mehrere der Ausgänge (24a, 24b, 24c, 24d) des Tiefsetzstellers angeschlossen ist und/oder von wenigstens einem DC/DC-Wandler (30a, 30b) gespeist wird, der an einen oder mehrere der Ausgänge (24a, 24b, 24c, 24d) des Tiefsetzstellers angeschlossen ist.

2. Wechselrichterschaltung nach Anspruch 1,
**dadurch gekennzeichnet, dass**
zwei der Schaltelemente (14a, 14b, 14c, 14d) über zwei in Serie geschaltete weitere Gleichrichtelemente (17a, 17b) verbunden sind, wobei ein gemeinsamer Verbindungspunkt der beiden weiteren Gleichrichtelemente (17a, 17b) mit einem Hilfspotenzial verbunden ist.

3. Wechselrichterschaltung nach einem der vorhergehenden Ansprüche,
**dadurch gekennzeichnet, dass**
zwei der Drosseln (12a, 12b, 12c, 12d) über mit diesen jeweils in Serie geschaltete weitere Gleichrichtelemente (17c, 17d) parallel geschaltet sind.

4. Wechselrichterschaltung nach einem der vorhergehenden Ansprüche,
**dadurch gekennzeichnet, dass**
in Serie zu dem wenigstens einen Gleichrichtelement (16, 16a, 16b) wenigstens ein weiteres Schaltelement (15) geschaltet ist.

5. Wechselrichterschaltung nach Anspruch 4,
**dadurch gekennzeichnet, dass**
parallel zu den Ausgängen (24a, 24b, 24c, 24d) jeweils wenigstens ein weiteres Gleichrichtelement (17e, 17f) geschaltet ist, welches einen Freilauf der mit dem jeweiligen Ausgang (24a, 24b, 24c, 24d) verbundenen Drossel (12a, 12b, 12c, 12d) ermöglicht.

6. Wechselrichterschaltung nach einem der vorhergehenden Ansprüche,
**dadurch gekennzeichnet, dass**
das wenigstens eine Gleichrichtelement (16, 16a, 16b) und das wenigstens eine weitere Gleichrichtelement (17a, 17b, 17c, 17d, 17e, 17f) als Synchrongleichrichter ausgeführt sind.

7. Wechselrichterschaltung nach Anspruch 6,
**dadurch gekennzeichnet, dass**
der Tiefsetzsteller bidirektional betreibbar ist.

8. Wechselrichterschaltung nach einem der vorhergehenden Ansprüche,
**dadurch gekennzeichnet, dass**
zusätzliche Schaltelemente (18a, 18b, 18c) zwischen den positiven und negativen Zuleitungen der Ausgänge (24a, 24b, 24c, 24d) vorgesehen sind, um die mehreren Ausgänge (24a, 24b, 24c, 24d) statisch in Serie oder parallel schalten zu können.

9. Wechselrichterschaltung nach einem der Ansprüche 1 bis 8,
**dadurch gekennzeichnet, dass**
an jedem der mehreren Ausgänge (24a, 24b, 24c, 24d) des Tiefsetzstellers ein separater Wechselrichter (32a, 32b) angeschlossen ist; und
die mehreren Wechselrichter (32a, 32b) transformatorisch mit einem Netz oder einem Verbraucher gekoppelt sind.

10. Wechselrichterschaltung nach einem der Ansprüche 1 bis 8,
**dadurch gekennzeichnet, dass**
an jedem der mehreren Ausgänge (24a, 24b, 24c, 24d) des Tiefsetzstellers ein separater Wechselrichter (32a, 32b) angeschlossen ist; und
jeder der mehreren Wechselrichter (32a, 32b) einem Netz oder einem Verbraucher nur einen Anteil der benötigten Wechselspannung bereitstellt.

11. Wechselrichterschaltung nach einem der Ansprüche 1 bis 8,
**dadurch gekennzeichnet, dass**
an die mehreren Ausgänge (24a, 24b, 24c, 24d) des Tiefsetzstellers ein gemeinsamer Wechselrichter (32) mit Mehrfacheingang angeschlossen ist.

12. Wechselrichterschaltung nach einem der Ansprüche 1 bis 8,
**dadurch gekennzeichnet, dass**
an jedem der mehreren Ausgänge (24a, 24b, 24c, 24d) des Tiefsetzstellers ein separater DC/DC-Wandler (30a, 30b) angeschlossen ist; und
die mehreren DC/DC-Wandler (30a, 30b) wenigstens einen Wechselrichter (32) speisen.

## Claims

1. Inverter circuit, comprising:
a step-down converter, having
a common input, to which a DC voltage source (10) for applying an input voltage can be connected; and
two or more outputs (24a, 24b, 24c, 24d), at each of which a DC voltage can be provided, the value of which is less than or equal to that of the input voltage, wherein
each of the plurality of outputs (24a, 24b, 24c, 24d) is connected to the common input via a positive lead and a negative lead,
at least one inductor (12a, 12b, 12c, 12d) is arranged in the positive lead and/or the negative lead of each output (24a, 24b, 24c, 24d),
the plurality of outputs (24a, 24b, 24c, 24d) are connected in series via in each case at least one rectifier (16, 16a, 16b), and
in the positive lead and/or the negative lead of each output (24a, 24b, 24c, 24d) at least one switching element (14a, 14b, 14c, 14d) is arranged, such that the outputs (24a, 24b, 24c, 24d) can be operated both in parallel with one another and in series with one another; and
at least one inverter (32, 32a, 32b) for converting the output voltages provided by the step-down converter at the plurality of outputs (24a, 24b, 24c, 24d) into an AC voltage, wherein the at least one inverter (32, 32a, 32b) is connected to one or more of the outputs (24a, 24b, 24c, 24d) of the step-down converter and/or is fed by at least one DC/DC converter (30a, 30b) which is connected to one or more of the outputs (24a, 24b, 24c, 24d) of the step-down converter.

2. Inverter circuit according to claim 1,
**characterised in that**
two of the switching elements (14a, 14b, 14c, 14d) are connected via two further rectifying elements (17a, 17b) connected in series, wherein a common connecting point of the two further rectifying elements (17a, 17b) is connected to an auxiliary potential.

3. Inverter circuit according to one of the preceding claims,
**characterised in that**
two of the inductors (12a, 12b, 12c, 12d) are connected in parallel via further rectifying elements (17c, 17d) connected in series with the inductors.

4. Inverter circuit according to one of the preceding claims,
**characterised in that**
at least one further switching element (15) is connected in series with the at least one rectifying element (16, 16a, 16b).

5. Inverter circuit according to claim 4,
**characterised in that**
in each case at least one further rectifying element (17e, 17f) is connected in parallel with the outputs (24a, 24b, 24c, 24d), which rectifying element makes possible a freewheeling of the inductor (12a, 12b, 12c, 12d) connected to the respective output (24a, 24b, 24c, 24d).

6. Inverter circuit according to one of the preceding claims,
**characterised in that**
the at least one rectifying element (16, 16a, 16b) and the at least one further rectifying element (17a, 17b, 17c, 17d, 17e, 17f) are embodied as synchronous rectifiers.

7. Inverter circuit according to claim 6,
**characterised in that**
the step-down converter can be operated bidirectionally.

8. Inverter circuit according to one of the preceding claims,
**characterised in that**
additional switching elements (18a, 18b, 18c) are provided between the positive and negative leads of the outputs (24a, 24b, 24c, 24d), enabling connection of the plurality of outputs (24a, 24b, 24c, 24d) statically in series or in parallel.

9. Inverter circuit according to one of claims 1 to 8,
**characterised in that**
a separate inverter (32a, 32b) is connected to each of the plurality of outputs (24a, 24b, 24c, 24d) of the step-down converter; and
the plurality of inverters (32a, 32b) are transformer-coupled to a power supply system or a load.

10. Inverter circuit according to one of claims 1 to 8,
**characterised in that**
a separate inverter (32a, 32b) is connected to each of the plurality of outputs (24a, 24b, 24c, 24d) of the step-down converter; and
each of the plurality of inverters (32a, 32b) provides only a portion of the required AC voltage to a power supply system or a load.

11. Inverter circuit according to one of claims 1 to 8,
**characterised in that**
a common inverter (32) with multiple inputs is connected to the plurality of outputs (24a, 24b, 24c, 24d) of the step-down converter.

12. Inverter circuit according to one of claims 1 to 8,
**characterised in that**
a separate DC/DC converter (30a, 30b) is connected to each of the plurality of outputs (24a, 24b, 24c, 24d) of the step-down converter; and
the plurality of DC/DC converters (30a, 30b) feed at least one inverter (32).

## Revendications

1. Circuit onduleur, présentant :
un convertisseur abaisseur, comportant
une entrée commune à laquelle peut être raccordée une source de tension continue (10) permettant d'appliquer une tension d'entrée ; et
deux ou plusieurs sorties (24a, 24b, 24c, 24d) à chacune desquelles peut être fournie une tension continue dont la valeur est inférieure ou égale à celle de la tension d'entrée,
chacune des plusieurs sorties (24a, 24b, 24c, 24d) étant reliée à l'entrée commune par une ligne d'amenée positive et une ligne d'amenée négative, au moins une bobine de choc (12a, 12b, 12c, 12d) étant disposée dans la ligne d'amenée positive et/ou la ligne d'amenée négative de chaque sortie (24a, 24b, 24c, 24d),
les plusieurs sorties (24a, 24b, 24c, 24d) étant couplées en série par chaque fois au moins un élément redresseur (16, 16a, 16b), et
au moins un élément de commutation (14a, 14b, 14c, 14d) étant disposé dans la ligne d'amenée positive et/ou la ligne d'amenée négative de chaque sortie (24a, 24b, 24c, 24d), de sorte que l'on peut faire fonctionner les sorties (24a, 24b, 24c, 24d) aussi bien en parallèle qu'en série entre elles ; et
au moins un onduleur (32, 32a, 32b) pour convertir les tensions de sortie fournies par le convertisseur abaisseur aux plusieurs sorties (24a, 24b, 24c, 24d) en une tension alternative, ledit au moins un onduleur (32, 32a, 32b) étant raccordé à une ou plusieurs des sorties (24a, 24b, 24c, 24d) du convertisseur abaisseur et/ou étant alimenté par au moins un convertisseur continu-continu (30a, 30b) qui est raccordé à une ou plusieurs des sorties (24a, 24b, 24c, 24d) du convertisseur abaisseur.

2. Circuit onduleur selon la revendication 1,
**caractérisé en ce**
**que** deux des éléments de commutation (14a, 14b, 14c, 14d) sont reliés par deux autres éléments redresseurs (17a, 17b) couplés en série, un point de connexion commun des deux autres éléments redresseurs (17a, 17b) étant relié à un potentiel auxiliaire.

3. Circuit onduleur selon l'une des revendications précédentes,
**caractérisé en ce**
**que** deux des bobines de choc (12a, 12b, 12c, 12d) sont couplées en parallèle par d'autres éléments redresseurs (17c, 17d) chaque fois couplés en série avec celles-ci.

4. Circuit onduleur selon l'une des revendications précédentes,
**caractérisé en ce**
**qu'**au moins un autre élément de commutation (15) est couplé en série avec ledit au moins un élément redresseur (16, 16a, 16b).

5. Circuit onduleur selon la revendication 4,
**caractérisé en ce**
**que** chaque fois au moins un autre élément redresseur (17e, 17f) est couplé en parallèle sur les sorties (24a, 24b, 24c, 24d), lequel permet une roue libre de la bobine de choc (12a, 12b, 12c, 12d) reliée à la sortie (24a, 24b, 24c, 24d) respective.

6. Circuit onduleur selon l'une des revendications précédentes,
**caractérisé en ce**
**que** ledit au moins un élément redresseur (16, 16a, 16b) et ledit au moins un autre élément redresseur (17a, 17b, 17c, 17d, 17e, 17f) sont réalisés sous la forme de redresseurs synchrones.

7. Circuit onduleur selon la revendication 6,
**caractérisé en ce**
**que** le convertisseur abaisseur peut fonctionner de façon bidirectionnelle.

8. Circuit onduleur selon l'une des revendications précédentes,
**caractérisé en ce**
**que** des éléments de commutation supplémentaires (18a, 18b, 18c) sont prévus entre les lignes d'amenée positives et négatives des sorties (24a, 24b, 24c, 24d) pour pouvoir coupler les plusieurs sorties (24a, 24b, 24c, 24d) statiquement en série ou en parallèle.

9. Circuit onduleur, selon l'une des revendications 1 à 8,
**caractérisé en ce**
**qu'**un onduleur séparé (32a, 32b) est raccordé à chaque des plusieurs sorties (24a, 24b, 24c, 24d) du convertisseur abaisseur ; et
**que** les plusieurs onduleurs (32a, 32b) sont couplés par transformateur à un réseau ou à un consommateur.

10. Circuit onduleur selon l'une des revendications 1 à 8,
**caractérisé en ce**
**qu'**un onduleur séparé (32a, 32b) est raccordé à chaque des plusieurs sorties (24a, 24b, 24c, 24d) du convertisseur abaisseur ; et
**que** chacun des plusieurs onduleurs (32a, 32b) ne fournit à un réseau ou à un consommateur qu'une partie de la tension alternative nécessaire.

11. Circuit onduleur selon l'une des revendications 1 à 8,
**caractérisé en ce**
**qu'**un onduleur commun (32) à entrée multiple est raccordé aux plusieurs sorties (24a, 24b, 24c, 24d) du convertisseur abaisseur.

12. Circuit onduleur selon l'une des revendications 1 à 8,
**caractérisé en ce**
**qu'**un convertisseur continu-continu séparé (30a, 30b) est raccordé à chacune des plusieurs sorties (24a, 24b, 24c, 24d) du convertisseur abaisseur ; et
**que** les plusieurs convertisseurs continu-continu (30a, 30b) alimentent au moins un onduleur (32).
